(19) Europäisches Patentamt / European Patent Office / Office européen des brevets

(11) **EP 2 704 531 B1**

(12) **EUROPEAN PATENT SPECIFICATION**

(45) Date of publication and mention
of the grant of the patent:
**10.10.2018 Bulletin 2018/41**

(51) Int Cl.:
***H05B 33/08*** (2006.01)

(21) Application number: **13181906.2**

(22) Date of filing: **27.08.2013**

(54) **Power factor correction circuit and driver comprising the power factor correction circuit**

Leistungsfaktorkorrekturschaltung und Treiber mit Leistungsfaktorkorrekturschaltung

Circuit de correction de facteur de puissance et commande comprenant le circuit de correction de facteur de puissance

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2012 CN 201210320911**

(43) Date of publication of application:
**05.03.2014 Bulletin 2014/10**

(73) Proprietor: **OSRAM GmbH**
**80807 München (DE)**

(72) Inventors:
• **Wei, Zeke**
**Shenzhen, Guangdong 518053 (CN)**
• **Zhang, Quan**
**Shenzhen, Guangdong 518053 (CN)**
• **Zhuang, XiHe**
**Shenzhen, Guangdong 518053 (CN)**
• **Lin, Dan**
**Shenzhen, Guangdong 518053 (CN)**

(56) References cited:
**KR-B1- 101 057 684   US-A1- 2006 214 603**
**US-A1- 2012 081 017**

## Description

## Technical Field

The present invention relates to a power factor correction circuit, and in particular, to a power factor correction circuit that can quickly perform current control and a driver comprising the power factor correction circuit.

## Background Art

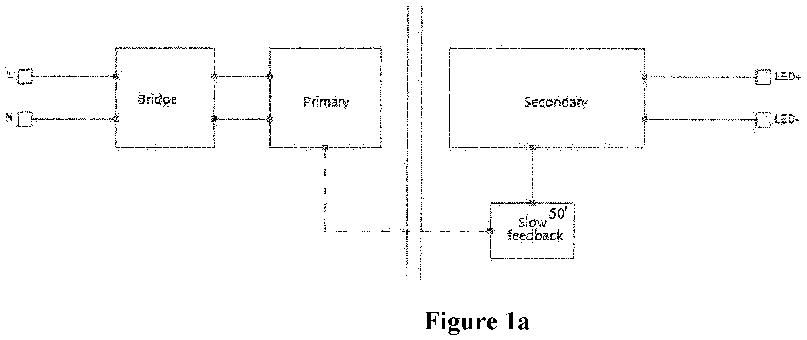

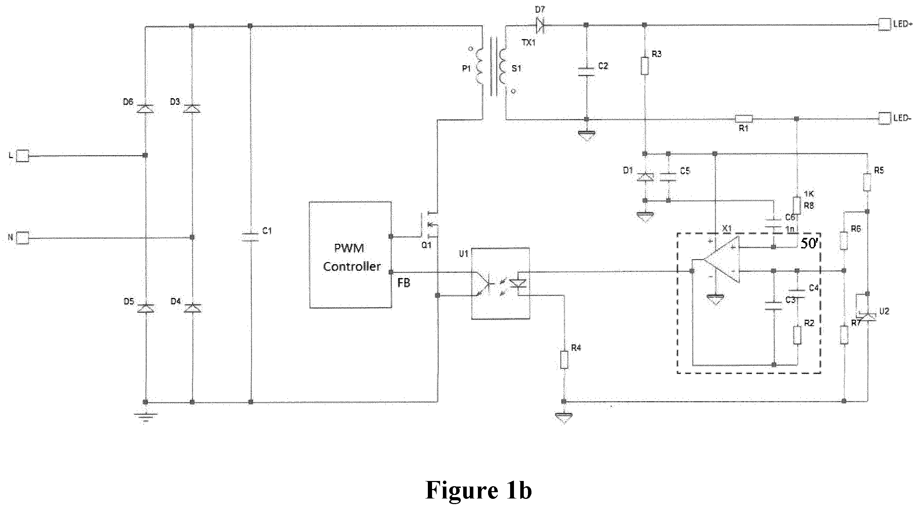

The single stage power factor correction circuit (PFC) topology becomes popular due to its advantages of a low cost and a high efficiency, and then the single stage power factor correction circuit is used more and more in LED drivers. However, the single stage PFC topology has some shortcomings of high ripple currents and big inrush output current in start-up. Specifically, as shown in Fig. 1a and Fig. 1b, the single stage PFC topology needs to both ensure a high power factor and convert for a constant current output, as a result, the response speed of a feedback loop 50' of the PFC circuit has to be sacrificed, such that a bandwidth of a normal loop is set to be less than two times of the main frequency, for instance, in a situation that there is a 230V/50Hz main input, the bandwidth should be under 100Hz, and when margin and stability are also taken into consideration, it is about 40-60Hz. Such feedback loop having a slow response speed can be called slow feedback loop, as shown in Fig. 1a and Fig. 1b. A very slow response speed means that a current output in start-up is out of control because the start-up action is often completed within 20ms and a loop response speed is about 20ms, so that in a time period of 0-20ms of the start-up, a current output to a load cannot be controlled, therefore, there is a big possibility for occurrence of phenomenon of damage to LED due to overcurrent caused by inrush current generated at an output side in start-up.

US2006/0214603A1 discloses a single stage LED driver with included Power Factor Correction (PFC), so that the input current follows the sinusoidal input voltage to achieve a high power factor. The converter has two feedback loops of which one has a greater bandwidth than the other.

## Summary of the Invention

In order to solve the above problem, one object of the present invention lies in providing a power factor correction circuit that can quickly perform current control. Such power factor correction circuit uses a double feedback loop control technology and can realize the quick control of an output current so as to solve the problem that an LED might be damaged due to a too big inrush current in start-up.

The power factor correction circuit according to the present invention comprises: a rectifier bridge; a switch converter circuit having an input terminal in connection with an output terminal of the rectifier bridge; a load in connection with an output terminal of the switch converter circuit; a controller having a control terminal and a feedback terminal, the control terminal being in connection with a controlled terminal of the switch converter circuit, characterized by further comprising a first feedback loop and a second feedback loop that are in connection with a sample terminal of the switch converter circuit, the first feedback loop and the second feedback loop being such configured that the feedback terminal of the controller only receives a first feedback signal generated by the first feedback loop in a normal operation state of the power factor correction circuit, and the feedback terminal of the controller only receives a second feedback signal generated by the second feedback loop in a start-up state of the power factor correction circuit, and a bandwidth of the second feedback loop is greater than a bandwidth of the first feedback loop.

The concept of the present invention lies in: changing that a conventional single stage power factor correction circuit only comprises a single feedback loop, a power factor correction controller can be controlled through a feedback signal generated by the feedback circuit so as to realize constant control to a current output to a load, but in order to meet requirement of a high power factor of the power factor circuit, a bandwidth of the feedback loop is often 40-60Hz, and then a response speed thereof is very slow, and a current output in a start-up state is out of control, therefore, the power factor correction circuit is configured to comprise two feedback loops, i.e. a slow feedback loop and a fast feedback loop. The slow feedback loop is functionally identical as the conventional slow feedback loop as mentioned above, while the newly added quick feedback loop is configured to allow the power factor correction circuit to control the current output to the load in the start-up using a feedback signal generated thereby, so as to avoid damage to the load by overcurrent in the start-up.

Besides, the quick feedback loop and the slow feedback loop are such configured that the feedback terminal of the controller only receives the first feedback signal generated by the slow feedback loop in the normal operation state of the power factor correction circuit, and the feedback terminal of the controller only receives the second feedback signal generated by the quick feedback loop in the start-up state of the power factor correction circuit, i.e. feedback signals fed back to the feedback terminal of the controller are switched between the quick feedback loop and the slow feedback loop, so that a current-limiting control to a current output to the load in the start-up can be realized while assuring a high power factor of the power factor correction circuit and realizing the constant control to the current output to the load, therefore, the damage to the load due to overcurrent in the start-up can be avoided.

In one preferred embodiment according to the present invention, the second feedback loop and the first feedback loop are connected in parallel between the sample terminal and the feedback terminal. Through such configuration, it can be realized with a simple circuit structure that a feedback signal fed back to the feedback terminal of the controller is a signal generated by the quick feedback loop in the start-up and a signal generated by the slow feedback loop in the normal operation state, so that the cost is low.

In one preferred embodiment according to the present invention, the first feedback loop and the second feedback loop are such configured that a gain of the first feedback loop is greater than a gain of the second feedback loop. By configuring the first feedback loop and the second feedback loop in such a manner that the gain of the first feedback loop is greater than the gain of the second feedback loop, it is realized that the feedback terminal of the controller only receives the first feedback signal generated by the first feedback loop in the normal operation state of the power factor correction circuit, and thus, a gain ratio is used to control whether signals of the two feedback loops can be received by the feedback terminal of the controller, the circuit configuration can be simplified, the design is simple and easy, and it is convenient for control.

In one preferred embodiment according to the present invention, a bandwidth of the first feedback loop is 40-60Hz, and a bandwidth of the second feedback loop is of kHz magnitude. Through such configuration, in a situation that a power voltage supplied by a power supply is 230V/50Hz, the high power factor of the power factor correction circuit and the constant control to the current output to the load can be realized in the normal operation state by using the first feedback loop, and the current-limiting control to the current output to the load during the period of start-up is realized in a situation that the start-up of the power factor correction circuit has a duration of 20ms by using the second feedback loop.

In one preferred embodiment according to the present invention, the first feedback loop comprises a first operational amplifier; and a first feedback network comprising a first compensating network that is connected between an inverting input and an output of the first operational amplifier and a first resistive element that has one end in connection with the inverting input of the first operational amplifier and the first compensating network. By configuring the first resistive element in the first feedback loop in such a manner, an pole of the gain of the first feedback loop can be assured so that the gain ratio of gains of the first feedback loop to the second feedback loop can be easily adjusted.

In one preferred embodiment according to the present invention, the second feedback loop comprises a second operational amplifier; and a second feedback network comprising a second compensating network that is connected between an inverting input and an output of the second operational amplifier and a second resistive element that has one end in connection with the inverting input of the second operational amplifier and the second compensating network and the other end in connection with the first resistive element. Through such configuration of the second feedback loop, the second feedback loop can be assured to be capable of feeing a high-frequency signal output to the load back to the feedback terminal of the controller, such that the controller can adjust the current output to the load more precisely, and meanwhile, such configuration of the second resistive element in the second feedback loop can assure an pole of the gain of the second feedback loop so that the gain ratio of the two feedback loops can be easily adjusted.

In one preferred embodiment according to the present invention, the first compensating network is formed by serially connecting a third resistive element and a first capacitive element and then connecting them with a second capacitive element in parallel, and the second compensating network is formed by a third capacitive element. Through such configuration, the first feedback loop can be allowed to feed a low-frequency component in a signal output to the load back to the controller, and the second feedback loop can be allowed to feed a high-frequency component in a signal output to the load back to the controller, so that the high power factor and more precise control to the current output to the load can be realized. In addition, the first compensating network and the second compensating network also can have other forms as long as the bandwidth of the first feedback loop is 40-60Hz, the bandwidth of the second feedback loop is of kHz magnitude, and the gain of the first feedback loop is greater than the gain of the second feedback loop.

In one preferred embodiment according to the present invention, switch means are further comprised. By using the switch means, only the second feedback signal is allowed to be fed back to the feedback terminal of the controller in the start-up state and only the first feedback signal is allowed to be fed back to the feedback terminal of the controller in the normal operation state. To enable the feedback signals generated by different feedback loops in different states to flow to the feedback terminal of the controller, by using the switch means, is characterized with a simple design, easy accomplishment and a low cost.

In one preferred embodiment according to the present invention, the switch means comprise a first switch and a second switch, the first switch is connected between an output terminal of the first feedback loop and the feedback terminal of the controller, and the second switch is connected between an output terminal of the second feedback loop and the feedback terminal of the controller. Through such configuration, it can be realized that in the start-up state, the first switch is disabled and the second switch is enabled such that only the feedback signal generated by the second feedback loop is fed back to the feedback terminal of the controller, and in the normal operation state, the first switch is enabled and the second switch is disabled such that only the feedback signal generated by the first feedback loop is fed back to the feedback terminal of the controller, thus, the implementation method is simple and easy to use. Preferably, the first switch and the second switch are diodes, transistors or MOSFETs.

In one preferred embodiment according to the present invention, the switch converter circuit comprises a converter having a primary side unit and a secondary side unit, and input terminals of the first feedback loop and the second feedback loop are connected to the secondary side unit. Through such configuration, the first feedback loop and the second feedback loop can be allowed to sample the signal output by the switch converter circuit to the load to realize control to the current output to the load and control of the power factor. The design is simple and easy to use.

In one preferred embodiment according to the present invention, the switch converter circuit further comprises a third switch, a control electrode of the third switch is used as the controlled terminal of the switch converter circuit, and a working electrode of the third switch is connected with one input terminal of the primary side unit, and the other input terminal of the primary side unit is connected to the rectifier bridge. Through such configuration, a duty cycle of on and off of the third switch can be controlled by using a PWM controller, i.e. by adjusting a duty cycle of a pulse signal output by the PWM controller to the control electrode of the third switch, so as to realize control to the power factor and control to the current output to the load. The structure is simple and precise control can be performed.

The other object of the present invention lies in providing a driver comprising the power factor correction circuit according to any of the above. In a situation that the driver comprises the above power factor correction circuit, the driver can avoid damage to the load due to overcurrent in the start-up while being capable of realizing the high power factor.

The power factor correction circuit according to the present invention can assure that the load is not damaged by overcurrent in the start-up in a precondition that the high power factor can be assured.

**Brief Description of the Drawings**

The accompanying drawings constitute a part of the present Description and are used to provide further understanding of the present invention. Such accompanying drawings illustrate the embodiments of the present invention and are used to describe the principles of the present invention together with the Description. In the accompanying drawings the same components are represented by the same reference numbers. As shown in the drawings:

Fig. 1a is a block diagram of a power factor correction circuit in the part art, and Fig. 1b is a schematic circuit diagram of the power factor correction circuit shown in Fig. 1a;

Fig. 2 is a block diagram of a first embodiment of a power factor correction circuit according to the present invention;

Fig. 3 is a detailed circuit diagram of the power factor correction circuit shown in Fig. 2;

Fig. 4 is an output voltage waveform of two feedback loops of the power factor correction circuit shown in Fig. 3; and

Fig. 5a and Fig. 5b are a waveform of an output current of the power factor correction circuit shown in Fig. 1b and a waveform of an output current of the power factor correction circuit shown in Fig. 3, respectively.

**Detailed Description of the Embodiments**

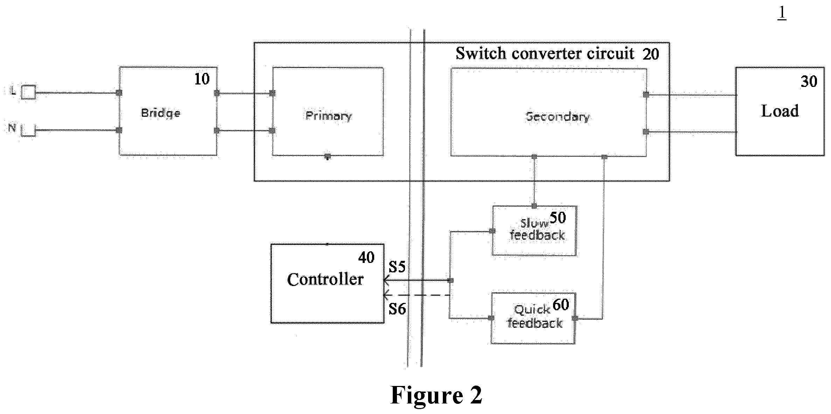

Fig. 2 is a block diagram of a first embodiment of a power factor correction circuit according to the present invention. As shown in Fig. 2, a power factor correction circuit 1 comprises a rectifier bridge 10 that receives a power from a power supply (not shown) and rectifies the power received; a switch converter circuit 20 that has an input terminal in connection with an output terminal of the rectifier bridge 10 and is configured to receive the power from the rectifier bridge 10 and to convert the power; a load 30 that is connected to an output terminal of the switch converter circuit 20 to receive the power for operation from the switch converter circuit 20; a controller 40 that has a control terminal in connection with a switch (not shown) of the switch converter circuit 20 for controlling on and off of the switch converter circuit 20 to realize power factor correction control and control of a current output to the load; a first feedback loop 50 that has an input terminal in connection with a sample terminal of the switch converter circuit 20 and an output terminal in communication with a feedback terminal of the controller 40; and a second feedback loop 60 that has an input terminal in connection with the sample terminal of the switch converter circuit 20 and an output terminal in communication with the feedback terminal of the controller 40.

Specifically, when the power factor correction circuit 1 is in a normal and stable operation state, only a first feedback signal S5 generated by the first feedback loop 50 can flow to the controller 40, while the second feedback loop 60 serves no function, at which time, in order to realize a high power factor of the power factor correction circuit 1, the first feedback loop 50 is set to have a quite slow control speed and a narrow bandwidth (less than two times of power frequency, about 40-60Hz), so that the first feedback loop 50 is further allowed to be capable of realizing substantially constant control of the current output to the load. The first feedback loop 50 is also called a slow feedback loop.

when the power factor correction circuit 1 is stated up, only the second feedback signal S6 generated by the second feedback loop 60 can flow to the controller 40, while the first feedback loop 60 serves no function. Specifically, When the power factor correction circuit 1 is started up, a current sample signal sampled by the sample terminal suddenly increases, and as a duration of start-up is about 20ms, the start-up, an input trend, requires a quick response, which demands the second feedback loop 60 to have a quick control speed and a wider bandwidth than that of the first feedback loop 50. In the text, the current output to the load during start-up is quickly controlled by configuring the second feedback loop 60 to have a bandwidth of thousands of hertz. In addition, the second feedback loop 60 is also called a quick feedback loop.

In the present embodiment, the power factor correction circuit 1 is configured to comprise two feedback loops, i.e. the first feedback loop 50 and the second feedback loop 60, wherein in the normal and stable operation state of the power factor correction circuit 1, the controller 40 controls the switch converter circuit 20, using a control signal received from the first feedback loop 50, to supply to LED load a current for stable and normal operation, and in a start-up state of the power factor correction circuit 1, the controller 40 controls the switch converter circuit 20, using a feedback signal received from the second feedback loop 60, to realize quick control to the current output to the load 30, that is, through configuration of a quick feedback loop and a slow feedback loop in the power factor correction circuit 1, the problem of inrush current at an output side in the start-up cannot be controlled due to the slow response speed of the feedback loop in the prior art can be solved, while the power factor control and the constant control to the current output to the load can be realized.

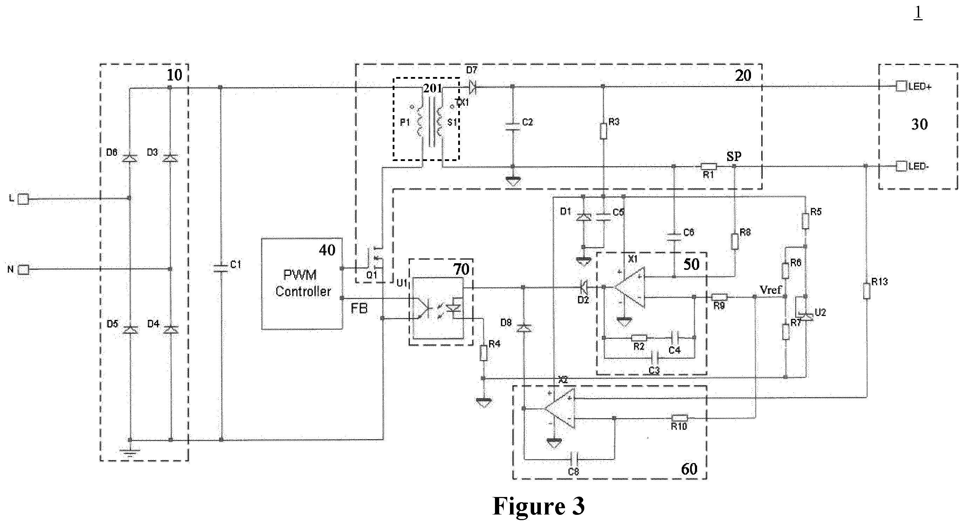

Fig. 3 is a detailed circuit diagram of the power factor correction circuit shown in Fig. 2. As shown in Fig. 3, the first feedback loop 50 and the second feedback loop 60 are connected in parallel between the sample terminal SP and the feedback terminal FB.

As shown in Fig. 3, the switch converter circuit 20 comprises a switch Q1 and a converter 201. The switch Q1 is a P channel enhancement type field effect transistor that has a gate in connection with the control terminal of the controller 40, and a base and a source connected together to be in connection with the rectifier bridge 10. The converter 201 comprises a primary winding P1 and a secondary winding S1. The primary winding P1 has one terminal in connection with an output terminal of the rectifier bridge 10 and the other terminal in connection with a drain of the switch Q1, and the secondary winding S1 has one terminal in connection with a positive terminal of the LED load and the other terminal in connection with a negative terminal of the LED load. The first feedback loop 50 comprises an operational amplifier X1 that has a non-inverting input in connection with the sample terminal SP; a compensating network 51 that is connected between an inverting input and an output of the operational amplifier X1; and a resistor R9 that has one end in connection between the inverting input of the operational amplifier X1 and the compensating network 51, wherein the compensating network 51 and the resistor R9 jointly constitute a first feedback network. In the present embodiment, the compensating network 51 is formed by serially connecting a resistor R2 and a capacitor C4 and then connecting them with a capacitor C3 in parallel. The second feedback loop 60 comprises an operational amplifier X2 that has a non-inverting input in connection with the sample terminal SP; a compensating network 61 that is connected between an inverting input and an output of the operational amplifier X2; and a resistor R10 that has one end in connection with an inverting input of the operational amplifier X2 and the other end in connection with the other end of the resistor R9, wherein the compensating network 61 and the resistor R10 jointly constitute a second feedback network. In the present embodiment, the compensating network 61 is formed by a capacitor C8.

Reference is still made to Fig. 3. As shown in Fig. 3, the power factor correction circuit 1 further comprises diodes D2 and D8 as switch means, wherein an anode of the diode D2 is in connection with the output terminal of the first feedback loop 50, a cathode of the diode D8 is in connection with the output terminal of the second feedback loop 60, and cathodes of the diodes D2 and D8 are connected with each other and then coupled to the feedback terminal FB of the controller 40. In the present embodiment, the cathodes of the diodes D2 and D8 are connected to the feedback terminal FB of the controller 40 through an optical coupler 70.

In the first embodiment, the first feedback loop 50 and the second feedback loop 60 are such configured that a bandwidth of the second feedback loop 60 is far greater than that of the first feedback loop 50, and the first feedback loop 50 and the second feedback loop 60 are configured in such a manner that a gain of the first feedback loop 50 is greater than that of the second feedback loop 60 in a normal and stable operation state of the power factor correction circuit 1.

Specifically, in the present embodiment, the bandwidth of the first feedback loop 50 is $1/(2\pi R_2 C_3)$, and the bandwidth of the second feedback circuit 60 is $1/(2\pi R_{10} C_8)$. The bandwidth of the first feedback loop 50 can be set to be 40-60Hz, and the bandwidth of the second feedback loop 60 can be set to be thousands of hertz by configuring parameters of the resistive elements R2 and R10 and the capacitive elements C3 and C8. The gain of the first feedback loop 50 is

$$G = -\frac{1+sR_2C_4}{sR_9(C_3+C_4)(1+sR_2C_2+C_2)}\text{ , and the}$$

gain of the second feedback loop 60 is

$$G = -\frac{\frac{1}{s \cdot C_8}}{R_{10}} = -\frac{1}{s \cdot C_8 \cdot R_{10}}\text{ , }$$

where s= $j2wf$. The gain of the first feedback loop 50 is ensured to be greater than that of the second feedback loop 60 by setting the parameters of various resistive elements and capacitive elements.

Through the above configuration, the diode D2 can be assured to be forwardly conducted and the diode D8 is reversely cut off in the stable operation state of the power factor correction circuit 1, so that the controller 40 only receives the feedback signal generated by the first feedback loop 50 in the normal and stable operation state, and since the first feedback loop 50 is set to have a very slow control speed and a narrow bandwidth, the high power factor of the power factor correction circuit 1 and substantially constant control of the current output to the load can be realized.

In addition, through the above configuration, in the start-up state of the power factor correction circuit 1, since the bandwidth of the first feedback loop is set to be tens of hertz and the bandwidth of the second feedback loop 60 is set to be thousands of hertz, during the start-up period of about 20ms, as a voltage output from the first feedback loop 50 rises slowly and a voltage output from the second feedback loop 60 rises quickly, at this time, the diode D8 is forwardly conducted and the diode D2 is reversely cut off since the voltage output from the first feedback loop 50 is greater than the voltage output from the second feedback loop 60, thus, the controller 40 only receives the feedback signal generated by the second feedback loop 60. Since the bandwidth of the second feedback loop 60 is set to be thousands of hertz, even if in the start-up period of about 20ms, the second feedback loop 60 also can feed information about current output to the LED load back to the controller 40, so that the controller can control the switch Q1 using the feedback signal received from the second feedback loop 60 so as to control the current output to the LED load, such that damage to the LED load caused by overcurrent during start-up can be avoided.

It should be understood that in the power factor correction circuit shown in Fig. 3, a resistor R1 connected between the LED load and second coil S1 is a sample resistor, the voltage across the resistor R1 is input into the non-inverting input of operational amplifier X1 in the first feedback loop 50 and the non-inverting input of operational amplifier X2 in the second feedback loop 60, and is compared with the reference voltage Vref which is input into the inverting input of operational amplifier X1 in the first feedback loop 50 and the inverting input of operational amplifier X2 in the second feedback loop 60. The signals generated by the first feedback loop 50 and the second feedback loop 60 are output to the controller 40 after being adjusted by the first feedback network and the second feedback network, thereby achieving power factor control and constant current control and limiting the current output to the load 30.

It should be noted that, a resistor R8 and a capacitor C6 form a filter network, such that the signal received by the first feedback loop 50 is a low-frequency signal, thereby achieving power factor control in the normal and stable operation state.

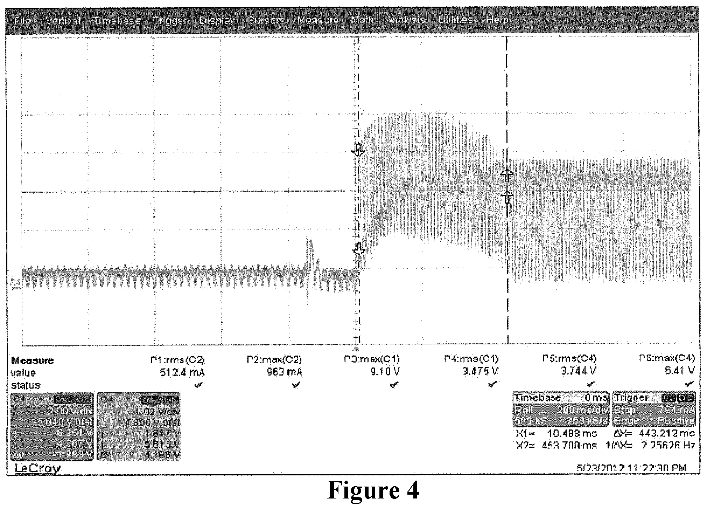

In addition, Fig. 4 is an output voltage waveform of two feedback loops of the power factor correction circuit shown in Fig. 3. It can be seen from Fig. 4 that a voltage signal output from the second feedback loop 60 is greater than a voltage signal of the first feedback loop 50 during the start-up period, thus, at this period, the diode D8 is forwardly conducted, and the diode D2 is reversely cut off, so that only the voltage signal output from the second feedback loop 60 flows to the controller 40, and then, the controller 40 controls the switch Q1 of the switch converter circuit 20 using the feedback signal received from the second feedback loop 60 to realize quick current-limiting control output to the LED load 30. Besides, it also can be seen from Fig. 4 that in a normal and stable operation period, the voltage signal output from the second feedback loop 60 is less than the voltage signal output from the first feedback loop 50, thus at this period, the diode D5 is reversely cut off and the diode D2 is forwardly conducted, so that only the voltage signal output from the first feedback loop 50 flows to the controller 40, and then the controller 40 controls the switch Q1 of the switch converter circuit 20 using the feedback signal received from the first feedback loop 50 to realize the power factor control and the constant control to current output to the load.

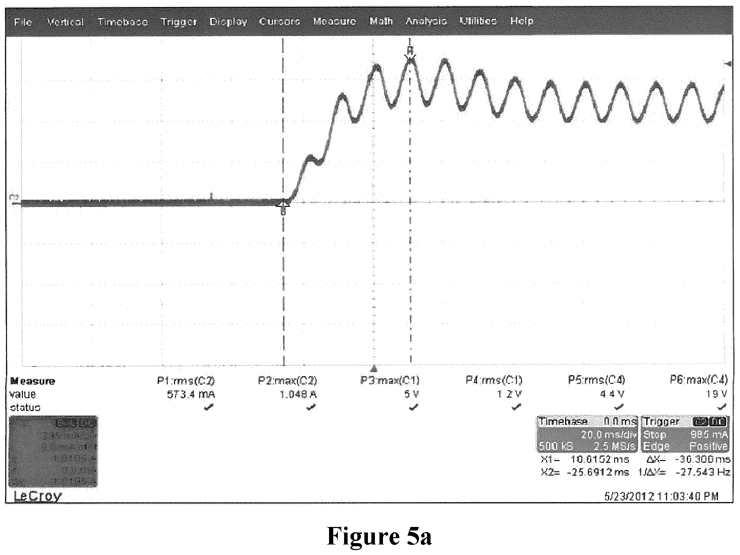

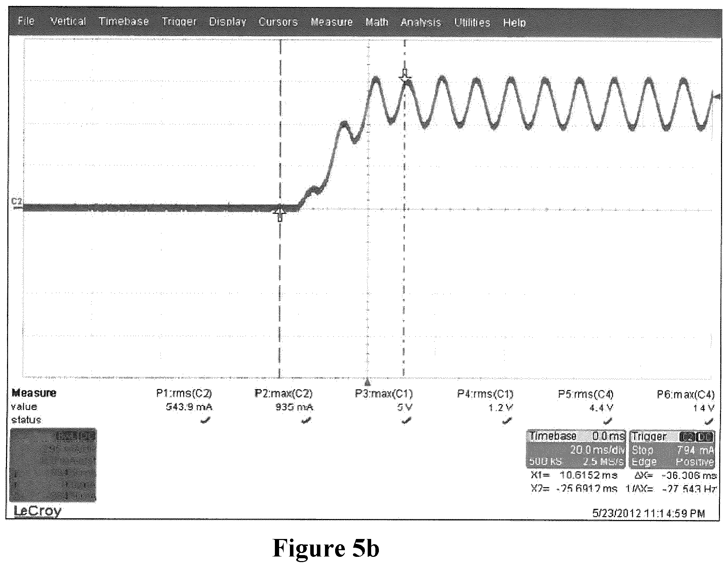

For the sake of easy understanding, a waveform of an output current of the power factor correction circuit in the prior art and a waveform of an output current of the power factor correction circuit of the present invention are also given, as shown in Fig. 5a and Fig. 5b. It can be seen from Fig. 5a and Fig. 5b that overshoot exists in the output current of the power factor correction circuit in the prior art during the start-up time, and in the output current of the power factor correction circuit according to one embodiment of the present invention, the output current during the start-up and the output current in the stable operation state are approximately equal and overshoot current is not output. Therefore, the power factor correction circuit according to one embodiment of the present invention can avoid damage to the LED load by the overcurrent in the start-up.

It should be noted that in the present embodiment, the controller 40 is a PWM controller that realizes control to the switch Q1 of the switch converter circuit 20 by controlling a duty cycle of a pulse output.

In another embodiment of the power factor correction circuit according to the present invention, the compensating network 51 and the compensating network 61 can have multiple variations, and they can be formed by serially connecting capacitor and resistor as long as it is assured that the gain of the first feedback loop is greater than that of the second feedback loop, the bandwidth of the first feedback loop is tens of hertz, and the bandwidth of the second feedback loop is thousands of hertz.

In another embodiment of the power factor correction circuit according to the present invention, transistors and MOSFETs can be used to replace diodes D2 and D8 to play as the switch means, and the specific configuration mode would easily occur to the person normally skilled in the art according to the teaching of the present invention, and unnecessary details will not be given herein.

The power factor correction circuit above can be applied to a driver for driving an LED load. In a situation that the driver has the above power factor correction circuit, the driver can avoid damage to the LED load due to overcurrent in the start-up while being capable of realizing the high power factor.

**Claims**

1. A power factor correction circuit (1) comprising: a rectifier bridge (10); a switch converter circuit (20) having an input terminal in connection with an output terminal of the rectifier bridge (10); a load (30) in connection with an output terminal of the switch converter circuit (20); a controller (40) having a control terminal and a feedback terminal (FB), the control terminal being in connection with a controlled terminal of the switch converter circuit (20), further comprising a first feedback loop (50) and a second feedback loop (60) that are in connection with a sample terminal (SP) of the switch converter circuit (20), and a bandwidth of the second feedback loop (60) is greater than a bandwidth of the first feedback loop (50),
**characterized in that**
the first feedback loop (50) and the second feedback loop (60) being configured such that the feedback terminal (FB) of the controller (40) only receives a first feedback signal (S5) generated by the first feedback loop (50) in a normal operation state of the power factor correction circuit (1), and the feedback terminal (FB) of the controller (40) only receives a second feedback signal (S6) generated by the second feedback loop (60) in a start-up state of the power factor correction circuit (1).

2. The power factor correction circuit according to Claim 1, **characterized in that** the second feedback loop (60) and the first feedback loop (50) are connected in parallel between the sample terminal (SP) and the feedback terminal (FB).

3. The power factor correction circuit according to Claim 1, **characterized in that** the first feedback loop (50) and the second feedback loop (60) are configured such that a gain of the first feedback loop (50) is greater than that of the second feedback loop (60).

4. The power factor correction circuit according to any of Claims 1-3, **characterized in that** a bandwidth of the first feedback loop (50) is 40-60Hz, and a bandwidth of the second feedback loop (60) is of kHz magnitude.

5. The power factor correction circuit according to Claim 1, **characterized in that** the first feedback loop (50) comprises a first operational amplifier (X1); and a first feedback network comprising a first compensating network (51) that is connected between an inverting input and an output of the first operational amplifier (X1) and a first resistive element (R9) that has one end in connection with the inverting input of the first operational amplifier (X1) and the first compensating network (51).

6. The power factor correction circuit according to Claim 5, **characterized in that** the second feedback loop (60) comprises a second operational amplifier (X2); and a second feedback network comprising a second compensating network (61) that is connected between an inverting input and an output of the second operational amplifier (X2) and a second resistive element (R10) that has one end in connection with the inverting input of the second operational amplifier (X2) and the second compensating network (61) and the other end in connection with the first resistive element (R9).

7. The power factor correction circuit according to Claim 5 or 6, **characterized in that** the first compensating network (51) is formed by serially connecting a third resistive element (R2) and a first capacitive element (C4) and then connecting them with a second capacitive element (C3) in parallel, and the second compensating network is formed by a third capacitive element (C8).

8. The power factor correction circuit according to Claim 1, **characterized by** further comprising switch means (D2, D8), by using which only the second feedback signal (S6) is allowed to be fed back to the feedback terminal (FB) of the controller (40) in the start-up state and only the first feedback signal (S5) is allowed to be fed back to the feedback terminal (FB) of the controller (40) in the normal operation state.

9. The power factor correction circuit according to Claim 8, **characterized in that** the switch means comprise a first switch (D2) and a second switch (D8), the first switch (D2) is connected between an output terminal of the first feedback loop (50) and the feedback terminal (FB) of the controller (40), and the second switch (D8) is connected between an output terminal of the second feedback loop (60) and the feedback terminal (FB) of the controller (40).

10. The power factor correction circuit according to Claim 9, **characterized in that** the first switch (D2) and the second switch (D8) are diodes, transistors or MOSFETs.

11. The power factor correction circuit according to Claim 1, **characterized in that** the switch converter circuit (20) comprises a converter (201) having a primary side unit (P1) and a secondary side unit (S1), and input terminals of the first feedback loop (50) and the second feedback loop (60) are coupled to the secondary side unit (S1).

12. The power factor correction circuit according to Claim 11, **characterized in that** the switch converter circuit (20) further comprises a third switch (Q1), a control electrode of the third switch (Q1) is used as the controlled terminal of the switch converter circuit (20), and a working electrode of the third switch (Q1) is connected with one input terminal of the primary side unit (P1), and the other input terminal of the primary side unit (P1) is connected to the rectifier bridge (10).

13. A driver comprising the power factor correction circuit according to any of Claims 1-12.

**Patentansprüche**

1. Leistungsfaktor-Korrekturschaltung (1), umfassend: eine Gleichrichterbrücke (10); eine Schaltwandlerschaltung (20) mit einem Eingangsanschluss in Verbindung mit einem Ausgangsanschluss der Gleichrichterbrücke (10); eine Last (30) in Verbindung mit einem Ausgangsanschluss der Schaltwandlerschaltung (20); eine Steuerung (40) mit einem Steueranschluss und einem Feedbackanschluss (FB), wobei der Steueranschluss in Verbindung mit einem gesteuerten Anschluss der Schaltwandlerschaltung (20) steht, ferner umfassend eine erste Feedbackschleife (50) und eine zweite Feedbackschleife (60), die in Verbindung mit einem Abtastanschluss (SP) der Schaltwandlerschaltung (20) stehen, und eine Bandbreite der zweiten Feedbackschleife (60) größer als eine Bandbreite der ersten Feedbackschleife (50) ist, **dadurch gekennzeichnet, dass** die erste Feedbackschleife (50) und die zweite Feedbackschleife (60) so ausgelegt sind, dass der Feedbackanschluss (FB) der Steuerung (40) nur ein von der ersten Feedbackschleife (50) erzeugtes erstes Feedbacksignal (S5) in einem normalen Betriebszustand der Leistungsfaktor-Korrekturschaltung (1) empfängt, und der Feedbackanschluss (FB) der Steuerung (40) nur ein von der zweiten Feedbackschleife (60) erzeugtes zweites Feedbacksignal (S6) in einem Anlaufzustand der Leistungsfaktor-Korrekturschaltung (1) empfängt.

2. Leistungsfaktor-Korrekturschaltung nach Anspruch 1, **dadurch gekennzeichnet, dass** die zweite Feedbackschleife (60) und die erste Feedbackschleife (50) parallel zwischen dem Abtastanschluss (SP) und dem Feedbackanschluss (FB) geschaltet sind.

3. Leistungsfaktor-Korrekturschaltung nach Anspruch 1, **dadurch gekennzeichnet, dass** die erste Feedbackschleife (50) und die zweite Feedbackschleife (60) so ausgelegt sind, dass eine Verstärkung der ersten Feedbackschleife (50) größer ist als die der zweiten Feedbackschleife (60).

4. Leistungsfaktor-Korrekturschaltung nach einem der Ansprüche 1-3, **dadurch gekennzeichnet, dass** eine Bandbreite der ersten Feedbackschleife (50) 40-60 Hz ist und eine Bandbreite der zweiten Feedbackschleife (60) eine Größenordnung von kHz hat.

5. Leistungsfaktor-Korrekturschaltung nach Anspruch 1, **dadurch gekennzeichnet, dass** die erste Feedbackschleife (50) einen ersten Operationsverstärker (X1) umfasst; und ein erstes Feedback-Netzwerk, das ein erstes Kompensationsnetzwerk (51) umfasst, das zwischen einem invertierenden Eingang und einem Ausgang des ersten Operationsverstärkers (X1) und einem ersten Widerstandselement (R9) angeschlossen ist, das ein Ende in Verbindung mit dem invertierenden Eingang des ersten Operationsverstärkers (X1) und dem ersten Kompensationsnetzwerk (51) aufweist.

6. Leistungsfaktor-Korrekturschaltung nach Anspruch 5, **dadurch gekennzeichnet, dass** die zweite Feedbackschleife (60) einen zweiten Operationsverstärker (X2) umfasst; und ein zweites Feedbacknetzwerk, das ein zweites Kompensationsnetzwerk (61) umfasst, das zwischen einem invertierenden Eingang und einem Ausgang des zweiten Operationsverstärkers (X2) und einem zweiten Widerstandselement (R10) geschaltet ist, das ein Ende in Verbindung mit dem invertierenden Eingang des zweiten Operationsverstärkers (X2) und dem zweiten Kompensationsnetzwerk (61) und das andere Ende in Verbindung mit dem ersten Widerstandselement (R9) aufweist.

7. Leistungsfaktor-Korrekturschaltung nach Anspruch 5 oder 6, **dadurch gekennzeichnet, dass** das erste Kompensationsnetzwerk (51) durch Reihenschaltung eines dritten Widerstandselements (R2) und eines ersten kapazitiven Elements (C4) und anschließende Parallelschaltung mit einem zweiten kapazitiven Element (C3) und das zweite Kompensationsnetzwerk durch ein drittes kapazitives Element (C8) gebildet ist.

8. Leistungsfaktor-Korrekturschaltung nach Anspruch 1, **dadurch gekennzeichnet, dass** sie ferner Schaltmittel (D2, D8) umfasst, mit denen im Anlaufzustand nur das zweite Feedbacksignal (S6) auf den Feedbackanschluss (FB) des Reglers (40) und im Normalbetrieb nur das erste Feedbacksignal (S5) auf den Feedbackanschluss (FB) des Reglers (40) zurückgeführt werden darf.

9. Leistungsfaktor-Korrekturschaltung nach Anspruch 8, **dadurch gekennzeichnet, dass** die Schaltmittel einen ersten Schalter (D2) und einen zweiten Schalter (D8) umfassen, wobei der erste Schalter (D2) zwischen einen Ausgangsanschluss der ersten Feedbackschleife (50) und den Feedbackanschluss (FB) der Steuerung (40) geschaltet ist, und der zweite Schalter (D8) zwischen einen Ausgangsanschluss der zweiten Feedbackschleife (60) und den Feedbackanschluss (FB) der Steuerung (40) geschaltet ist.

10. Leistungsfaktor-Korrekturschaltung nach Anspruch 9, **dadurch gekennzeichnet, dass** der erste Schalter (D2) und der zweite Schalter (D8) Dioden, Transistoren oder MOSFETs sind.

11. Leistungsfaktor-Korrekturschaltung nach Anspruch 1, **dadurch gekennzeichnet, dass** die Schaltwandlerschaltung (20) einen Wandler (201) mit einer primärseitigen Einheit (P1) und eine sekundärseitigen Einheit (S1) umfasst und Eingangsanschlüsse der ersten Feedbackschleife (50) und der zweiten Feedbackschleife (60) mit der sekundärseitigen Einheit (S1) gekoppelt sind.

12. Leistungsfaktor-Korrekturschaltung nach Anspruch 11, **dadurch gekennzeichnet, dass** die Schaltwandlerschaltung (20) ferner einen dritten Schalter (Q1) umfasst, eine Steuerelektrode des dritten Schalters (Q1) als gesteuerter Anschluss der Schaltwandlerschaltung (20) verwendet wird, und eine Arbeitselektrode des dritten Schalters (Q1) mit einem Eingangsanschluss der primärseitigen Einheit (P1) und der andere Eingangsanschluss der primärseitigen Einheit (P1) mit der Gleichrichterbrücke (10) verbunden ist.

13. Treiber umfassend die Leistungsfaktor-Korrekturschaltung nach einem der Ansprüche 1-12.

**Revendications**

1. Un circuit de correction de facteur de puissance (1) comprenant : un pont redresseur (10), un circuit de convertisseur de commutateur (20) possédant une borne d'entrée en connexion avec une borne de sortie du pont redresseur (10), une charge (30) en connexion avec une borne de sortie du circuit de convertisseur de commutateur (20), un dispositif de commande (40) possédant une borne de commande et une borne de rétroaction (FB), la borne de commande étant en connexion avec une borne commandée du circuit de convertisseur de commutateur (20), comprenant en outre une première boucle de rétroaction (50) et une deuxième boucle de rétroaction (60) qui sont en connexion avec une borne échantillon (SP) du circuit de convertisseur de commutateur (20), et une bande passante de la deuxième boucle de rétroaction (60) est supérieure à une bande passante de la première boucle de rétroaction (50),

**caractérisé en ce que**

la première boucle de rétroaction (50) et la deuxième boucle de rétroaction (60) sont configurées de sorte que la borne de rétroaction (FB) du dispositif de commande (40) reçoive uniquement un premier signal de rétroaction (S5) généré par la première boucle de rétroaction (50) dans un état de fonctionnement normal du circuit de correction de facteur de puissance (1), et de sorte que la borne de rétroaction (FB) du dispositif de commande (40) reçoive uniquement un deuxième signal de rétroaction (S6) généré par la deuxième boucle de rétroaction (60) dans un état de démarrage du circuit de correction de facteur de puissance (1).

2. Le circuit de correction de facteur de puissance selon la revendication 1, **caractérisé en ce que** la deuxième boucle de rétroaction (60) et la première boucle de rétroaction (50) sont connectées en parallèle entre la borne échantillon (SP) et la borne de rétroaction (FB).

3. Le circuit de correction de facteur de puissance selon la revendication 1, **caractérisé en ce que** la première boucle de rétroaction (50) et la deuxième boucle de rétroaction (60) sont configurées de sorte qu'un gain de la première boucle de rétroaction (50) soit supérieur à celui de la deuxième boucle de rétroaction (60).

4. Le circuit de correction de facteur de puissance selon l'une quelconque des revendications 1 à 3, **caractérisé en ce qu'**une bande passante de la première boucle de rétroaction (50) est de 40 à 60 Hz et qu'une bande passante de la deuxième boucle de rétroaction (60) est d'une magnitude du kHz.

5. Le circuit de correction de facteur de puissance selon la revendication 1, **caractérisé en ce que** la première boucle de rétroaction (50) comprend un premier amplificateur opérationnel (X1), et un premier réseau de rétroaction comprenant un premier réseau de compensation (51) qui est connecté entre une entrée inverseuse et une sortie du premier amplificateur opérationnel (X1) et un premier élément résistif (R9) qui possède une extrémité en connexion avec l'entrée inverseuse du premier amplificateur opérationnel (X1) et le premier réseau de compensation (51).

6. Le circuit de correction de facteur de puissance selon la revendication 5, **caractérisé en ce que** la deuxième boucle de rétroaction (60) comprend un deuxième amplificateur opérationnel (X2), et un deuxième réseau de rétroaction comprenant un deuxième réseau de compensation (61) qui est connecté entre une entrée inverseuse et une sortie du deuxième amplificateur opérationnel (X2) et un deuxième élément résistif (R10) qui possède une extrémité en connexion avec l'entrée inverseuse du deuxième amplificateur opérationnel (X2) et le deuxième réseau de compensation (61) et l'autre extrémité en connexion avec le premier élément résistif (R9).

7. Le circuit de correction de facteur de puissance selon la revendication 5 ou 6, **caractérisé en ce que** le premier réseau de compensation (51) est formé par la connexion en série d'un troisième élément résistif (R2) et d'un premier élément capacitif (C4), et ensuite la connexion de ceux-ci avec un deuxième élément capacitif (C3) en parallèle, et le deuxième réseau de compensation est formé par un troisième élément capacitif (C8).

8. Le circuit de correction de facteur de puissance selon la revendication 1, **caractérisé en ce qu'**il comprend en outre un moyen de commutation (D2, D8), par l'utilisation duquel uniquement le deuxième signal de rétroaction (S6) est autorisé à être renvoyé vers la borne de rétroaction (FB) du dispositif de commande (40) dans l'état de démarrage et uniquement le premier signal de rétroaction (S5) est autorisé à être renvoyé vers la borne de rétroaction (FB) du dispositif de commande (40) dans l'état de fonctionnement normal.

9. Le circuit de correction de facteur de puissance selon la revendication 8, **caractérisé en ce que** le moyen de commutation comprend un premier commutateur (D2) et un deuxième commutateur (D8), le premier commutateur (D2) est connecté entre une borne de sortie de la première boucle de rétroaction (50) et la borne de rétroaction (FB) du dispositif de commande (40), et le deuxième commutateur (D8) est connecté entre une borne de sortie de la deuxième boucle de rétroaction (60) et la borne de rétroaction (FB) du dispositif de commande (40).

10. Le circuit de correction de facteur de puissance selon la revendication 9, **caractérisé en ce que** le premier commutateur (D2) et le deuxième commutateur (D8) sont des diodes, des transistors ou des MOSFET.

11. Le circuit de correction de facteur de puissance selon la revendication 1, **caractérisé en ce que** le circuit de convertisseur de commutateur (20) comprend un convertisseur (201) possédant une unité latérale primaire (P1) et une unité latérale secondaire (S1), et des bornes d'entrée de la première boucle de rétroaction (50) et de la deuxième boucle de rétroaction (60) sont couplées à l'unité latérale secondaire (S1).

12. Le circuit de correction de facteur de puissance selon la revendication 11, **caractérisé en ce que** le circuit de convertisseur de commutateur (20) comprend en outre un troisième commutateur (Q1), une électrode de commande du troisième commutateur (Q1) est utilisé en tant que borne commandée du circuit de convertisseur de commutateur (20), et une électrode de travail du troisième commutateur (Q1) est connectée à une borne d'entrée de l'unité latérale primaire (P1), et l'autre borne d'entrée de l'unité latérale primaire (P1) est connectée au pont redresseur (10) .

13. Un pilote comprenant le circuit de correction de facteur de puissance selon l'une quelconque des revendications 1 à 12.

**Figure 1a**

**Figure 1b**

**Figure 2**

**Figure 3**

**Figure 4**

Figure 5a

**Figure 5b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060214603 A1